# NEUE EUROPÄISCHE PATENTSCHRIFT

(11) **EP 0 509 228 B2**
(45) Veröffentlichungstag und Bekanntmachung des Hinweises auf die Entscheidung über den Einspruch: **12.06.2002**
(45) Hinweis auf die Patenterteilung: 25.09.1996
(21) Anmeldenummer: 92104037.4
(22) Anmeldetag: 10.03.1992
(51) Int. Cl.: B65D 77/06

(54) **Palettenbehälter**
Pallet-container
Caisse-palette

(30) Priorität: 15.03.1991 DE 4108399; 11.11.1991 DE 4136963
(43) Veröffentlichungstag der Anmeldung: 21.10.1992
(73) Patentinhaber: PROTECHNA S.A., 1701 Fribourg (CH)
(72) Erfinder: Schütz, Udo, W-5418 Selters (DE)
(74) Vertreter: Pürckhauer, Rolf, Dipl.-Ing.

(56) Entgegenhaltungen:
- EP-A- 0 136 673
- DE-A- 3 819 911
- DE-B- 2 947 603
- DE-U- 9 002 099
- FR-A- 2 573 388
- US-A- 2 648 428
- US-A- 4 007 694

## Beschreibung

Die Erfindung betrifft Palettenbehälter für Flüssigkeiten, mit einem Innenbehälter aus Kunststoff mit je einem verschließbaren Einfüll- und Entleerungsstutzen und einem als Ablaufboden ausgebildeten Boden mit einer mittigen flachen Ablaufrinne, die mit einem leichten Gefälle von der Behälterrückwand zu dem an der Vorderwand des Behälters angeordneten Entleerungsstutzen zum Anschluß eines Entnahmehahns verläuft, einer auf einem Palettenrahmen befestigten Palette, die mit einer Bodenwanne zur formschlüssigen Aufnahme des Innenbehälters ausgerüstet ist, sowie mit einem an dem Innenbehälter anliegenden Außenmantel aus Metall.

Aus der DE-U-9 002 099 bekannte Palettenbehälter dieser Gattung sind mit einer elastischen Bodenwanne ausgerüstet, die aus einem Polyethylen-Kunststoff blasgeformt ist. Die Bodenwanne, die aus fertigungstechnischen Gründen zweiteilig hergestellt ist, muß über die ganze Unterseite auf der Palette abgestützt werden, damit die Wanne die erforderliche Tragfähigkeit für den Innenbehälter mit dem flüssigen Transport- und Lagergut erhält und die notwendige Steifigkeit und das erforderliche Dämpfungsvermögen sowohl gegenüber einer Schwingungsbeanspruchung durch beim Transport von dem Flüssiggut ausgehende Schwallschwingungen sowie durch das Transportfahrzeug übertragene Fahrschwingungen als auch gegenüber einer Schlag- und Stoßbeanspruchung z.B. bei einem Fall des Palettenbehälters aus einer bestimmten Höhe aufweist. Ferner muß die Bodenwanne mit der Unterseite auf der Palette fixiert werden, um eine irreversible Verformung der Wanne, die durch das bei einer Dauerbelastung der Wanne durch das Gewicht des flüssigen Füllgutes verursachte Fließen des Kunststoffmaterials bewirkt wird und die zu einem Bruch der Wanne führen kann, zu vermeiden.

Um die gestellten Anforderungen hinsichtlich Tragfähigkeit, Widerstandsfähigkeit gegen Schwingungs-, Schlag- und Stoßbeanspruchungen sowie Kriech- und Fließfestigkeit des Kunststoffmaterials zu erreichen, sind an der Unterseite der Bodenwanne geschlossene Hohlrippen angeformt, die über die ganze Wannenunterseite verteilt sind und die nach innen gewölbte Stützmulden bilden, mit denen sich die Bodenwanne auf gitterartig angeordneten Rohrstäben des oberen Rohrrahmens der Stahlrohrpalette abstützt.

Die Palette dieses bekannten Palettenbehälters mit einer durch Blasformen hergestellten Bodenwanne aus Kunststoff, an deren Unterseite geschlossene Hohlrippen zur Bildung von Stützmulden angeformt sind und die aus blasformtechnischen Gründen zweiteilig hergestellt werden muß, sowie mit einem auf einem Fußrahmen stehenden oberen Stahlrohrrahmen zur Abstützung der Bodenwanne, der gitterrostartig angeordnete Rohrstäbe aufweist, ist konstruktiv aufwendig und dementsprechend teuer in der Herstellung und hat ein verhältnismäßig großes Gewicht, das sich ungünstig auf die Transportkosten des Palettenbehälters auswirkt.

Gegenstand der Erfindung sind ferner Palettenbehälter für Flüssigkeiten der aus der US-A-2 648 428 bekannten Art, mit einem als Palette ausgebildeten Boden, wobei die Palette zur Handhabung mittels Hubstapler, Regalbediengerät und dgl. eingerichtet und als Bodenwanne aus Blech mit einem Öffnungsrand ausgebildet ist, mit dem der Behältermantel aus Blech flüssigkeitsdicht verschweißt oder verschraubt ist, an der Vorderwand der Bodenwanne ein Entleerungsstutzen mit einer Entnahmearmatur angebracht ist und an dem oberen Rand des Blechmantels ein Verschlußdekkel aus Blech mit einem Einfüllstutzen und einem Schraubdeckel flüssigkeitsdicht befestigt ist.

Dieser Palettenbehälter mit einer Bodenwanne aus Blech, deren nach innen in den Behälterraum gewölbter Boden sich unter dem Druck der Flüssigkeitssäule der in dem Behälter befindlichen Flüssigkeit nach unten durchwölbt, unterliegt einer die Transportsicherheit beeinträchtigenden Gefährdung durch beim Transport vnm flüssigen Füllgut ausgahende Schwallschwingungen und durch das Transportfahrzeug übertragene Schwingungen, die ein Reißen des Wannenbodens bewirken können.

Der Erfindung liegt die Aufgabe zugrunde, den gattungsgemäßen Palettenbehälter im Hinblick auf eine Modulbauweise weiterzuentwickeln, die es ermöglicht. mit einer transportsicheren, einfach zu fertigenden Grundpalette Palettenbehälter mit Kunststoff-Innenbehälter und mit einem Blechmantel und / oder einem Gittermantel und Palettenbehälter zu erstellen, die lediglich aus einem Blechbehälter bestehen, wobei der Boden des Innenbehälters und der Palettenboden als Ablaufboden zur automatischen Restentleerung der Palettenbehälter ausgebildet sein sollen.

Diese Aufgabe ist erfindungsgemäß gelöst durch die Palettenbehälter gemäß den Patentansprüchen 1 und 14.

Die Unteransprüche beinhalten zweckmäßige Weiterbildungen der Erfindung.

Der erfindungsgemäße Palettenbehälter zeichnet sich durch folgende Vorteile aus:

Die Modulbauweise erlaubt es, mit einer als Bodenwanne ausgebildeten Grundpalette Palettenbehälter mit einem Kunststoff-Innenbehälter mit einem Außenmantel aus Blech und / oder einem Gitterwerk und als Blechbehältar ausgebildete Palettenbehälter zu fertigen. Die Modulbauweise ermöglicht eine rationelle kostengünstige Herstellung verschiedener Typen von Palettenbehältern. Der selbsttragend ausgebildete Boden der Bodenwanne der Palette ermöglicht eine wesentliche bauliche Vereinfachung der Palette gegenüber der Palette nach der DE-U-9 002 099, da eine Abstützung des Wannenbodens durch gitterartig angeordnete Rohrstäbe des oberen Palettenrahmens wie bei der Palette des bekannten Palettenbehälters nicht erforderlich ist. Die benötigte Tragfähigkeit zur Aufnahme der Gewichtkräfte, die durch das flüssige Füllgut bewirkt werden, erhält der Boden der als Bodenwanne ausgebildeten Palette, der bei der Ausführung des Palettenbehälters mit Kunststoff-Innenbehälter der Form des Ablaufbodens des Innenbehälters angepaßt ist und diesen abstützt und der bei der Ausführung des Palettenbehälters als Blechbehälter den selbsttragenden Ablaufboden bildet, durch von oben in den Boden der vorzugsweise als Tiefziehteil aus Blech gefertigten Bodenwanne eingepreßte, nach oben offene Versteifungssicken. Beim Tiefziehen der Bodenwanne und Einpressen der Versteifungssicken in den Wannenboden, das vorzugsweise in einem Arbeitsgang erfolgt, wird eine Kaltverfestigung des Blechmaterials erreicht, durch die der Wannenboden bei einer optimalen Blechstärke, die ein niedriges Gesamtgewicht der Palette ermöglicht, die erforderliche Tragfähigkeit erhält. Dabei sind die Versteifungssicken in dem zur Restentleerung als Ablaufboden ausgebildeten Wannenboden, der von den seitlichen Rändern der Bodenwanne zur Mittellängsachse derselben und von dem rückwärtigen zum vorderen Rand der Wanne abfällt,
derart ausgebildet, daß die Sickengründe in einer gemeinsamen horizontalen Ebene liegen, so daß gewährleistet ist,
daß beim Transport mit einem Hubstapler oder dgl. Hebezeug der Palettenbehälter horizontal auf den Tragarmen des Hubstaplers aufliegt. Der äußere Stützrand der Bodenwanne der Palette bildet zusammen mit dem Wannenboden und den Versteifungssicken nach unten offene Kammern. Durch diese Ausbildung des Wannenbodens als Hohlkammerboden zeichnet sich die Palette durch ein gutes Dämpfungsvermögen und eine hohe Steifigkeit sowohl bei einer Schwingungsbeanspruchung durch beim Transport vom Flüssiggut in dem Behälter ausgehende Schwallschwingungen und durch das Transportfahrzeug übertragene Fahrschwingungen als auch bei einer Stoß- oder Schlagbeanspruchung z.B. bei einem Fall aus der Höhe aus, so daß der Palettenbehälter den hohen Anforderungen hinsichtlich der Transport- und Unfallsicherheit in vollem Umfang genügt. Zur Herstellung der Blechbehälter von Palettenbehältern ohne Kunststoff-Innenbehälter, die besonders für die Lebensmittelindustrie vorgesehen sind, eignen sich besonders plattierte Bleche z.B. mit einem Innenblech aus Edelstahl und einem Außenblech aus Normalstahl. Die verschiedenen Palettenbehälter, die mit einem flexiblen Inliner aus einer Kunststoffolie oder einer Metall-Kunststoffverbundfolie ausgestattet werden können, sind bevorzugt für den Einsatz als Mehrwegbehälter bestimmt, die im Hinblick auf eine Entlastung der Umwelt von schädlichen Stoffen durch eine optimale Restentleerung und eine schadstofffreie Vernichtung des Inliners, z.B. durch Verbrennen und eine leichte Reinigung kostengünstig rekonditioniert werden können.

Die Erfindung ist nachstehend anhand von in der Zeichnung dargestellten Ausführungsbeispielen näher erläutert. Es zeigen
- Fig. 1: eine Seitenansicht,
- Fig. 2: die Draufsicht und
- Fig. 3: die Vorderansicht eines Palettenbehälters mit Kunststoff-Innenbehälter und Blechmantel,
- Fig. 4: eine perspektivische, vergrößerte Darstellung der als Bodenwanne ausgebildeten Palette des Behälters nach den Fign. 1 bis 3,
- Fig. 5: eine vergrößerte Längsschnittdarstellung des Auslaufbereiches eines auf einem unteren Behälter gestapelten Palettenbehälters nach den Fign. 1 bis 4,
- Fig. 6: eine Seitenansicht,
- Fig. 7: die Draufsicht und
- Fig. 8: die Vorderansicht eines Palettenbehälters mit Kunststoff-Innenbehälter und Gittermantel,
- Fig. 9: eine vergrößerte Längsschnittdarstellung eines auf einem unteren Behälter gestapelten Palettenbehälters nach den Fign. 6 bis 8.
- Fig. 10: eine vergrößerte Längsschnittdarstellung des Auslaufbereiches eines auf einem unteren Behälter gestapelten Palettenbehälters nach den Fign. 6 bis 8,
- Fig. 11: die perspektivische Frontansicht eines Palettenbehälters mit Gittermantel sowie einer Aufbewahrungskassette für Begleitpapiere und einem Schutzblech für den Entnahmehahn, und
- Fig. 12: die Frontansicht eines als Blechbehälter ausgebildeten Palettenbehälters mit einem flexiblen Inliner.

Bei den verschiedenen Ausführungsformen des Palettenbehälters sind gleiche oder ähnliche Bauteile durch gleiche Bezugszeichen gekennzeichnet.

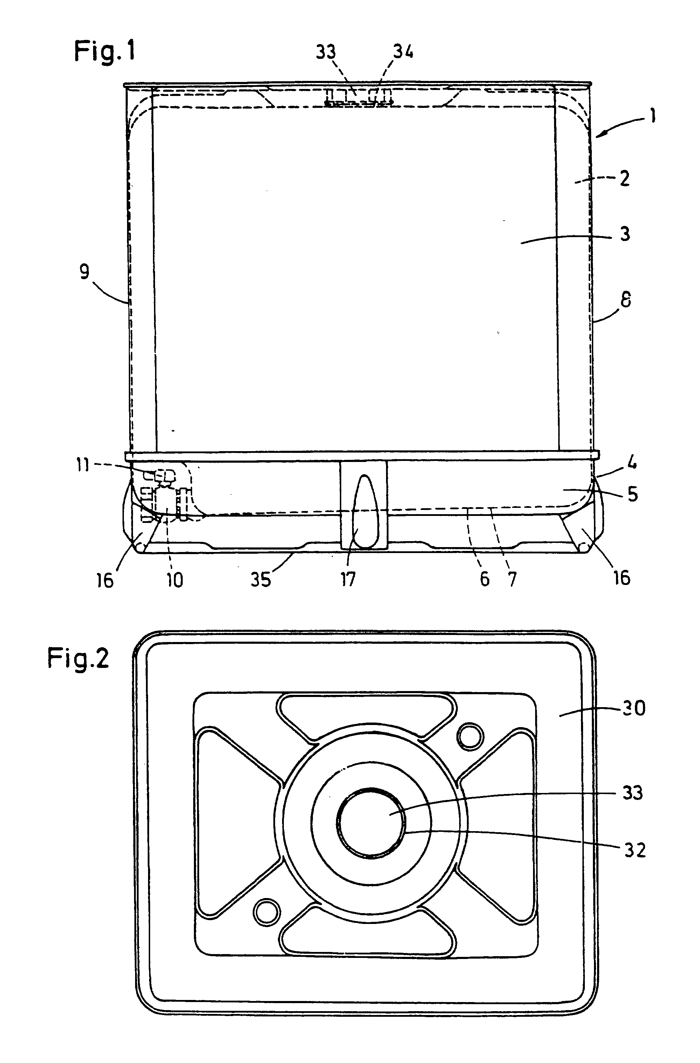

Der Palettenbehälter 1 nach den Fign. 1 bis 3 zur Lagerung und für den Transport von Flüssigkeiten weist als Hauptbauteile einen austauschbaren Innenbehälter 2 mit rechteckigem Grundriß und abgerundeten Ecken aus Polyethylen, einen Außenmantel 3 aus Blech sowie eine als Bodenwanne 5 aus Blech ausgebildete Palette 4 mit euronormgerechten Längen- und Breitenabmessungen zur formschlüssigen Aufnahme des Kunststoff-Innenbehälters 2 auf.

Der Boden 6 des Innenbehälters 2 ist als Ablaufboden mit einer mittigen, flachen Ablautünne 7 gestaltet, die mit einem leichten Gefälle von der Behälterrückwand 8 zu dem an der Vorderwand 9 des Behälters 2 angeordneten Entleerungsstutzen 10 zum Anschluß eines Entnahmehahns 11, vorzugswseise eines Kugel- oder Klappenhahns verläuft.

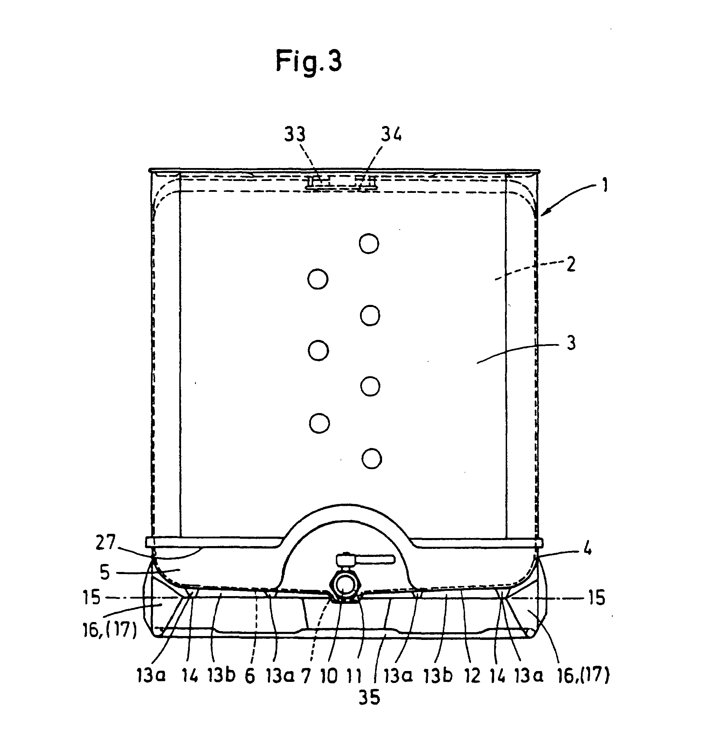

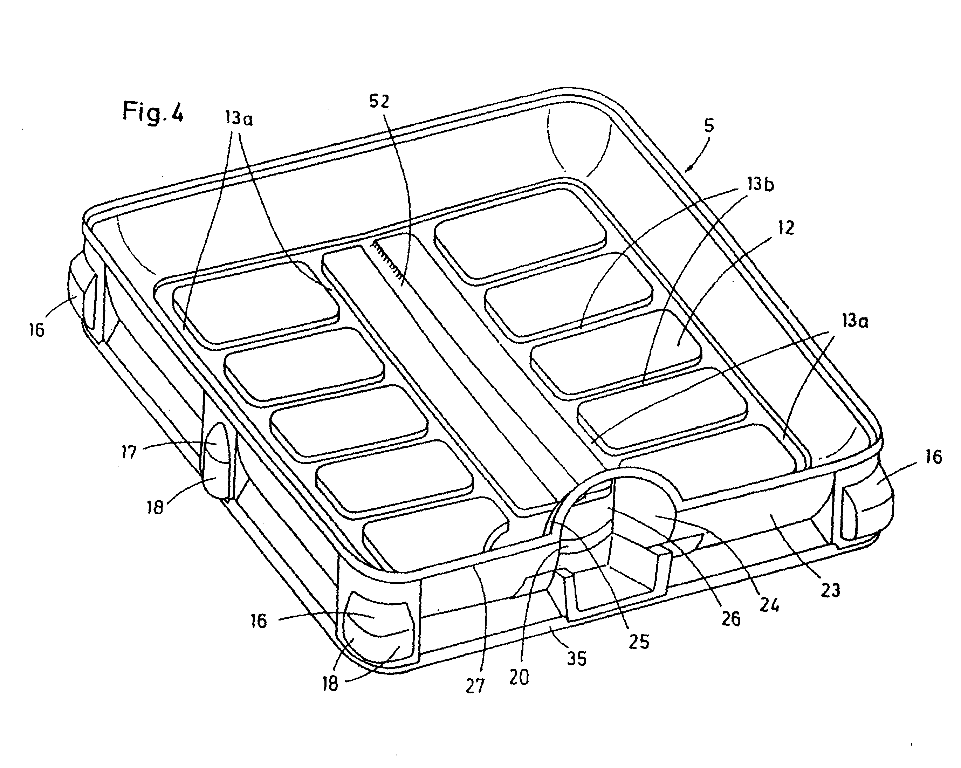

Der in der Neigung dem Ablaufboden 6 des Innenbehälters 2 angepaßte Boden 12 der Bodenwanne 5 weist in Richtung der und quer zur Ablaufrinne 7 des Innenbehälters 2 verlaufende Versteifungssichen 13a, 13b auf, deren Gründe 14 in einer gemeinsamen horizontalen Ebene 15-15 liegen, so daß die Palette 4 mit dem Boden 12 der Bodenwanne 5 horizontal auf den unter den Wannenboden 12 geschobenen, nicht dargestellten Greifarmen eines Gabelstaplers oder eines Regalbediengerätes aufliegt (Fign. 3 und 4).

Die Bodenwanne 5 ist auf ausgestellten Eck- 16 und Mittelfüßen 17 mit außenliegenden Positionierflächen 18 eines Palettenrahmens 35 befestigt, auf denen Codierungen zur Kennzeichnung des Füllgutes des Palettenbehälters 1 angebracht werden können.

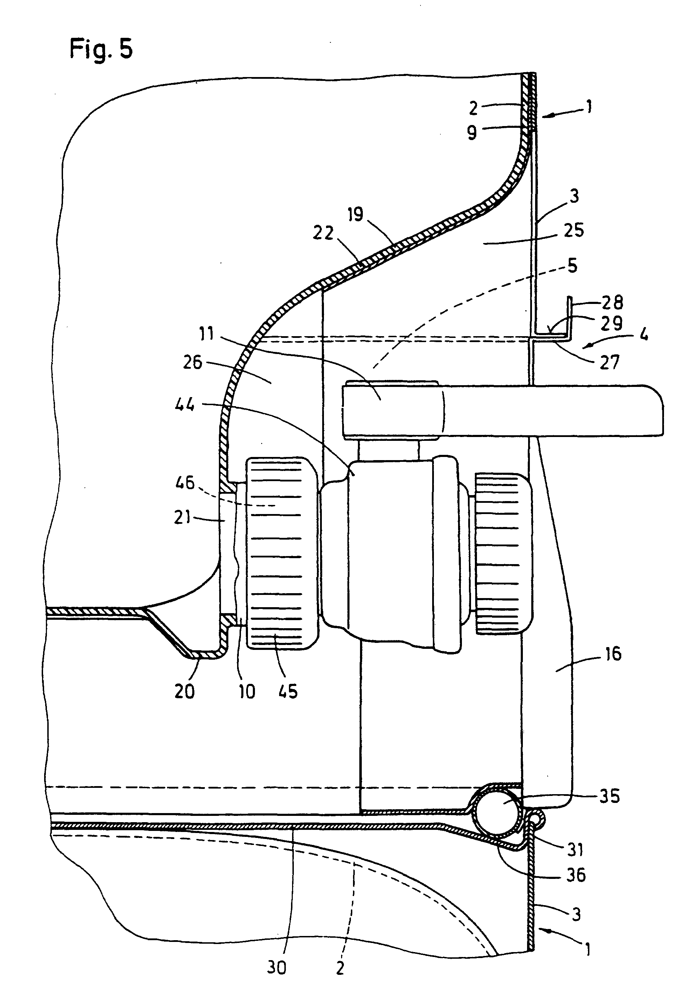

Der mittlere Abschnitt der Vorderwand 9 des Innenbehälters 2 ist im unteren Bereich als Einwölbung 19 ausgebildet, an die der Entleerungsstutzen 10 zur Anbringung des innerhalb der Kontur des Innenbehälters 2 gelegenen Entnahmehahns 11 angeformt ist. Die Einwölbung 19 des Innenbehälters 2 mit dem Entleerungsstutzen 10 und einem Bodensumpf 20 unter der Auslaßöffnung 21 in der Einwölbung 19 ist als haubenartig gestaltetes Kunststoff-Spritzteil 22 gefertigt, das an den Innenbehälter 2 angeblasen ist (Fig. 5).

Die Vorderwand 23 der den Innenbehälter 2 aufnehmenden Bodenwanne 5 weist eine der Einwölbung 19 des Innenbehälters 2 entsprechende Einwölbung 24 auf, an die eine der Einwölbung 19 des Innenbehälters 2 angepaßte Haube 25 einteilig angeformt oder als gesondertes Teil angeschweißt ist. In der Einwölbung 24 der Vorderwand 23 der Bodenwanne 5 und der an die Einwölbung 24 anschließenden Haube 25 befindet sich eine durchgehende Öffnung 26 zur Aufnahme des Entleerungsstutzens 10 des von oben in die Bodenwanne 5 eingesetzten Innenbehälters 2.

Die Bodenwanne 5 weist einen im Bereich der Einwölbung 24 der Vorderwand 23 unterbrochenen, horizontalen Öffnungsrand 27 mit einem rechtwinklig nach oben abgekanteten Steg 28 auf. Der Blechmantel 3 ist mit einem unteren, rechtwinklig abgebogenen Rand 29 auf dem Öffnungsrand 27 der Bodenwanne 5 mittels Laserschweißung oder mit Schrauben befestigt.

Die Bodenwanne 5 ist als Tiefziehteil aus Blech gefertigt, an dem die Eck- 16 und Mittelfüße 17 aus Metall oder Kunststoff des Palettenrahmens 35 angeschweißt oder angeschraubt sind.

Der Palettenbehälter 1 wird mit einem abnehmbaren Deckol 30 aus Blech verschlossen, der mit dem oberen Rand 31 des Blechmantels 3 verschraubt oder auf den Rand 31 aufgeklemmt wird. Der Deckel 30 weist in der Mitte eine Öffnung 32 für den mittels eines Schraubdeckels 33 verschließbaren Einfüllstutzen 34 des Kunststoff-Innenbehälters 2 auf.

Der Palettenrahmen 35 greift beim Stapeln der Palettenbehälter 1 in eine Randvertiefung 36 des an dem oberen Rand 31 des Blechmantels 3 befestigten Deckels 30 des jeweils unteren Palettenbehälters 1 ein und wird vom oberen Rand 31 des Blechmantels 3 formschlüssig umfaßt (Fig. 5).

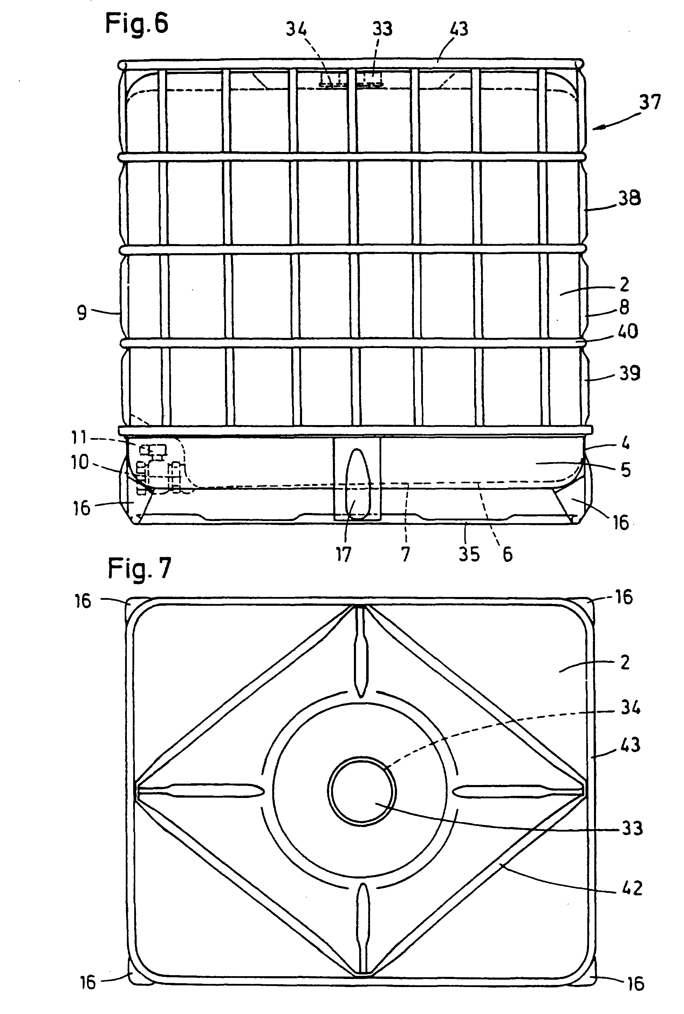

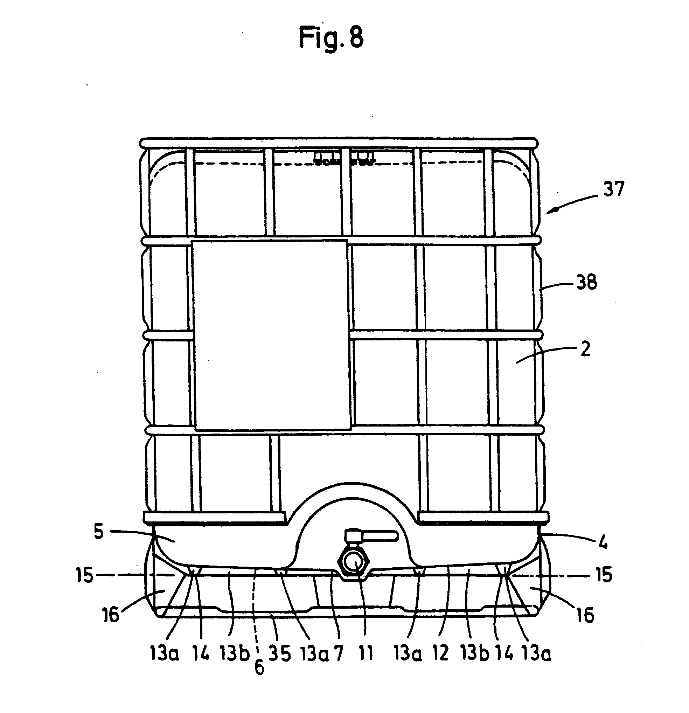

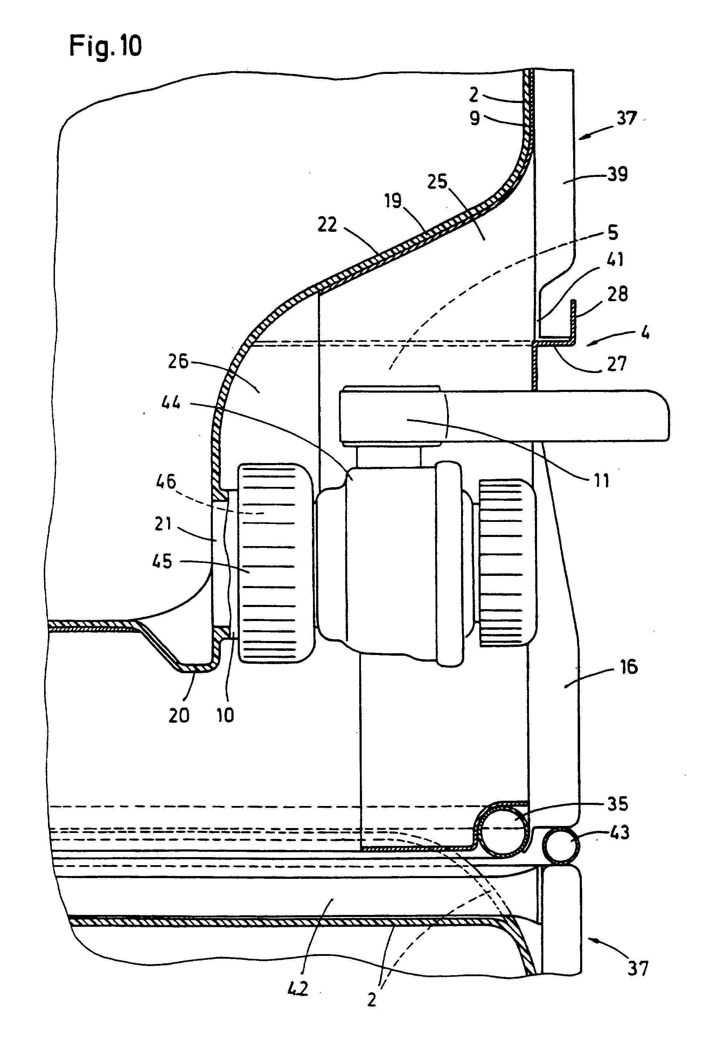

Der Palettenbehälter 37 nach den Fign. 6 bis 8 ist mit einem Gittermantel 38 aus sich kreuzenden senkrechten und waagerechten Gitterstäben 39, 40 aus Metall ausgerüstet. Zur Befestigung des Gittermantels 38 an der Bodenwanne 5 sind die abgeflachten, hakenförmig ausgebildeten Enden 41 der senkrechten Gitterstäbe 39 aus Rundstahl mit dem Öffnungsrand 27 der Bodenwanne 5 verschweißt oder verschraubt (Fig. 10). Anstatt eines Deckels hat der Palettenbehälter 37 einen Versteifungsrahmen 42 aus diagonal angeordneten Rohrstreben, die mit dem Gittermantel 38 jeweils in der Seitenmitte verschraubt sind.

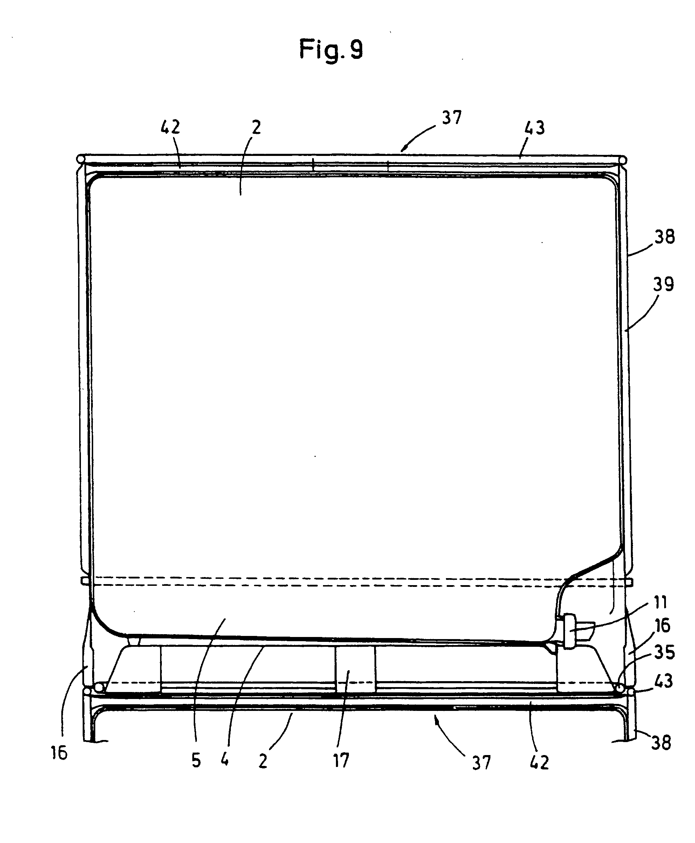

Beim Stapeln der Palettenbehälter 37 mit Gittermantel 38 greift der Palettenrahmen 35 in das obere Abschlußprofil 43 des Gittermantels 38 des jeweils unteren Palettenbehälters 37 ein, und die Eck- 16 und Mittelfüße 17 stützen sich auf dem oberen Abschlußprofil 43 des Gittermantels 38 des unteren Palettenbehälters 37 ab (Fign. 9 und 10).

Das Gehäuse 44 des aus Kunststoff, z.B. Polypropylen, hergestellten Entnahmehahns 11 nach Fig. 5 ist mittels einer geteilten Überwurfmutter 45 aus Kunststoff, deren Hälften auf dem Einlaßstutzen 46 des Hahngehäuses 44 zusammengeschweißt werden, an dem Entleerungsstutzen 10 des Innenbehälters 2 festgeschraubt.

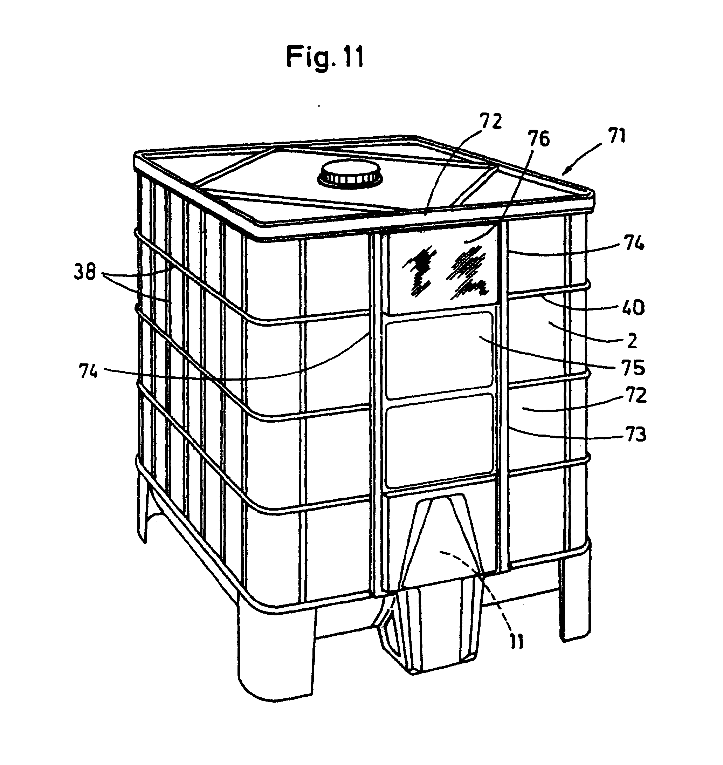

Der Gittermantel 38 des Palettenbehälters 71 nach Fig. 11 weist an der Stirnseite 72 eine Ausnehmung 73 auf, in der an den waagrechten Gitterstäben 40 zwei innerhalb der Gittermantelkontur gelegene Führungsschienen 74 angeschweißt sind. In die Führungsschienen 74 sind ein durchgehendes Blech 75 als Schmutz- und Beschädigungsschutz für den Entnahmehahn 11 sowie zur Anbringung von Beschriftungen wie Bedienungsanleitungen und eine einteilig mit dem Schutzblech 75 ausgebildete oder eine gesonderte flache Kassette 76 aus Blech oder Kunststoff zur Aufbewahrung von Warenbegleitpapieren aller Art wie Produktbeschreibungen, Liefervorschriften, Umweltinformationen, Werbematerial und dgl. eingeschoben.

Das Schutzblech 75 kann mit einer Entnahmesicherung als Originalitätsverschluß und zur Sicherung des Entnahmehahns 11 gegen unbefugtes Öffnen versehen sein.

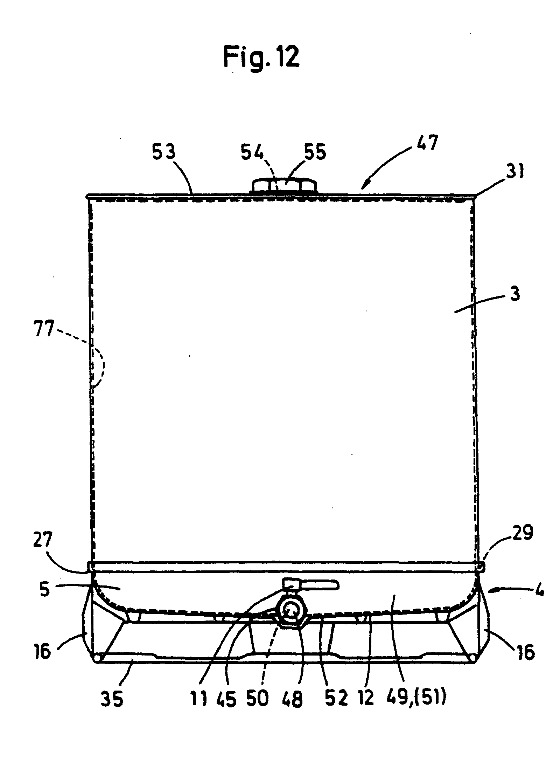

Der Palettenbehälter 47 nach Fig. 12 hat im Unterschied zu den Palettenbehältern 1, 37, 71 keinen Kunststoff-Innenbehälter. Der glatte Blechmantel 3 des insbesondere für die Lebensmittelindustrie vorgesehenen Palettenbehälters 47 ist mit dem unteren, rechtwinklig abgebogenen Rand 29 auf dem umlaufenden Öffnungsrand 27 der Bodenwanne 5 aus Blech mittels Laserschweißung befestigt. Der mit einem Anschlußgewinde für die Überwurfmutter 45 des Entnahmehahns 11 versehene Entleerungsstutzen 48 aus Stahl ist an der mit einer Auslauföffnung 50 versehenen Vorderwand 49 über dem Sumpf des von der Rückwand 51 zur Vorderwand 49 leicht abfallenden Ablaufbodens 12 der Bodenwanne 5 mit einer mittigen, flachen Ablaufrinne 52 angeschweißt. An der als Bodenwanne 5 ausgebildeten Palette 4 sind wie bei den Palettenbehältern 1, 37, 71 ausgestellte Eck- 16 und Mittelfüße 17 aus Blech eines Palettenrahmens 35 aus Stahlrohren befestigt. An dem oberen Rand 31 des Blechmantels 3 ist ein Verschlußdeckel 53 aus Blech mit einem Einfüllstutzen 54 und einem Schraubdeckel 55 flüssigkeitsdicht angeschweißt.

Der Blechmantel 3 des Palettenbehälters 47 ist vorzugsweise aus plattiertem Blech mit einem Innenblech aus Edelstahl und einem Außenblech aus Normalstahl hergestellt.

Der Palettenbehälter 47 aus Blech ohne Innenbehälter kann ebenso wie die Palettenbehälter 1, 37, 71 mit einem Kunststoff-Innenbehälter 2 mit einem flexiblen Inliner 77 aus einer geschweißten oder geblasenen Kunststoffolie oder einer geschweißten Metall-Kunststoffverbundfolie ausgestattet sein.

## Patentansprüche

1. Palettenbehälter (1) für Flüssigkeiten, mit einem Innenbehälter (2) aus Kunststoff mit je einem verschließbaren Einfüll- (34) und Entleerungsstutzen (10) und einem als Ablaufboden ausgebildeten Boden (6) mit einer mittigen, flachen Ablaufrinne (7), die mit einem leichten Gefälle von der Behälterrückwand (8) zu dem an der Vorderwand (9) des Behälters (2) angeordneten Entleerungsstutzen (10) zum Anschluß eines Entnahmehahns (11) verläuft, einer auf einem Palettenrahmen (35) befestigten Palette (4), die mit einer Bodenwanne (5) zur formschlüssigen Aufnahme des Innenbehälters (2) ausgerüstet ist, sowie mit einem an dem Innenbehälter (2) anliegenden Außenmantel (3) aus Metall, **dadurch gekennzeichnet, daß** der dem Ablaufboden (6) des Innenbehälters (2) angepaßte, selbsttragend ausgebildete und als Tiefziehteil aus Blech gefertigt Boden (12) der Bodenwanne (5) Versteifungssicken (13a, 13b) aufweist und die Sickengründe (14) in einer gemeinsamen horizontalen Ebene (15-15) liegen.

2. Palettenbehälter nach Anspruch 1, **dadurch gekennzeichnet, daß** der Eck- (16) und Mittelfüße (17) aufweisende Palettenrahmen (35) beim Stapeln von Palettenbehältern (1) mit Blechmantel (3) in eine Randvertiefung (36) des an dem oberen Rand (31) des Blechmantels (3) befestigten Deckels (30) eingreift und vom oberen Rand (31) des Blechmantels (3) formschlüssig umfaßt wird und daß der Palettenrahmen (35) beim Stapeln von Palettenbehältern (37) mit Gittermantel (38) in das obere Abschlußprofil (43) des Gittermantels (38) des jeweils unteren Palettenbehälters (37) eingreift, wobei sich die Eck- (16) und Mittelfüße (17) auf dem oberen Abschlußprofil (43) des Gittermantels (38) des unteren Palettenbehälters (37) abstützen.

3. Palettenbehälter nach Anspruch 1 und 2, **gekennzeichnet durch** auf Positionierflächen (18) der Eck- (16) und / oder Mittelfüße (17) angebrachte Codierungen zur Kennzeichnung des Füllgutes.

4. Palettenbehälter nach einem der Ansprüche 1 bis 3, **dadurch gekennzeichnet, daß** die Bodenwanne (5) einen horizontalen Öffnungsrand (27) zur Befestigung eines Blechmantels (3) oder der Gitterstäbe (39) eines Gittermantels (38) aufweist.

5. Palettenbehälter nach Anspruch 4, **gekennzeichnet durch** einen von dem horizontalen Öffnungsrand (27) der Bodenwanne (5) rechtwinklig nach oben abgekanteten Steg (28) zur Positionierung des Blech- (3) bzw. des Gittermantels (38).

6. Palettenbehälter nach einem der Ansprüche 1 bis 5, **dadurch gekennzeichnet, daß** der mittige Abschnitt der Vorderwand (9) des Innenbehälters (2) im unteren Bereich als Einwölbung (19) ausgebildet ist, an die der Entleerungsstutzen (10) zur Anbringung eines innerhalb der Kontur des Innenbehälters (2) gelegenen Entnahmehahns (11) angeformt ist, und daß die Vorderwand (23) der den Innenbehälter (2; 102) aufnehmenden Bodenwanne (5) eine der Einwölbung (19) des Innenbehälters (2) entsprechende Einwölbung (24) aufweist, an die eine der Einwölbung (19) des Innenbehälters (2) angepaßte Haube (25) einteilig angeformt oder als gesondertes Teil angeschweißt ist, wobei sich in der Einwölbung (24) der Vorderwand (23) der Bodenwanne (5) und der an die Einwölbung (24) anschließenden Haube (25) eine durchgehende Öffnung (26) zur Aufnahme des Entleerungsstutzens (10) des Innenbehälters (2) befindet.

7. Palettenbehälter nach Anspruch 6, **dadurch gekennzeichnet, daß** die Einwölbung (19) des Innenbehälters (2) mit dem Entleerungsstutzen (10) und einem Bodensumpf (20) am Stutzenansatz als haubenartig gestaltetes Kunststoff-Spritzteil (22) gefertigt ist, das an den Innenbehälter (2) angeblasen ist.

8. Palettenbehälter nach einem der Ansprüche 1 bis 7, **dadurch gekennzeichnet, daß** das Gehäuse (44) des aus Kunststoff hergestellten Entnahmehahns (11) mittels einer geteilten Überwurfmutter (45) aus Kunststoff, deren Hälften auf dem Einlaßstutzen (46) des Hahngehäuses (44) zusammengeschweißt werden, an dem Entleerungsstuzen (10) des Innenbehälters (2) festgeschraubt ist.

9. Palettenbehälter mit Gittermantel nach einem der Ansprüche 1 bis 8, **gekennzeichnet durch** eine Ausnehmung (73) des Gittermantels (38) auf der Stirnseite (72) des mit einem Gittermantel (38) ausgestatteten Palettenbehälters (71) sowie zwei in der Ausnehmung (73) an den waagerechten Gitterstäben (40) befestigte, innerhalb der Gittermantelkontur gelegene Führungsschienen (74) zum Einschieben eines durchgehenden Bleches (75) als Schmutz- und Beschädigungsschutz für den Entnahmehahn (11) sowie zur Anbringung von Beschriftungen und zum Einschieben einer flachen Kassette (76) aus Blech oder Kunststoff zur Aufbewahrung von Warenbegleitpapieren aller Art.

10. Palettenbehälter nach Anspruch 9, **gekennzeichnet durch** eine Entnahmesicherung des Schutzbleches (75) als Originalitätsverschluß und zur Sicherung des Entnahmehahns (11) gegen unbefugtes Öffnen.

11. Palettenbehälter nach einem der Ansprüche 1 bis 10, **dadurch gekennzeichnet, daß** der Innenbehälter (2) aus Kunststoff des Palettenbehälters (1; 37; 71) mit einem Außenmantel (3) aus Blech oder einem Gittermantel (38) ausgestattet ist.

12. Palettenbehälter mit, Gittermantel nach einem der Ansprüche 1 bis 11, **gekennzeichnet durch** einen an dem Kunststoff-Innenbehälter anliegenden Blechmantel sowie einen diesen abstützenden äußeren Gittermantel.

13. Palettenbehälter nach Anspruch 12, **gekennzeichnet durch** Öffnungen im Blechmantel, z.B. als Sichtfenster zur Kontrolle des Flüssiggutes im Kunststoff-Innenbehälter.

14. Palettenbehälter (47) für Flüssigkeiten, mit einem als Palette (4) ausgebildeten Boden, wobei die Palette (4) zur Handhabung mittels Hubstapler, Regalbediengerät und dgl. eingerichtet und als Bodenwanne (5) aus Blech mit einem Öffnungsrand (27) ausgebildet ist, mit dem der Behältermantel (3) aus Blech flüssigkeitsdicht verschweißt oder verschraubt ist, an der Vorderwand (49) der Bodenwanne (5) ein Entleerungsstutzen (48) mit einer Entnahmearmatur angebracht ist und an dem oberen Rand (31) des Blechmantels (3) ein Verschlußdeckel (53) aus Blech mit einem Einfüllstutzen (54) und einem Schraubdeckel (55) flüssigkeitsdicht befestigt ist, **dadurch gekennzeichnet, daß** der Boden (12) der Wanne (5) als Ablaufboden mit einer mittigen, flachen Ablaufrinne (52) ausgebildet ist, die mit einem leichten Gefälle von der Wannenrückwand (51) zu dem an der Vorderwand (49) der Bodenwanne (5) angebrachten Entnahmehahn (11) verläuft, der Ablaufboden (12) der Bodenwanne (5) Versteifungssicken (13a, 13b) aufweist, deren Sickengründe (14) in einer gemeinsamen horizontalen Ebene (15-15) liegen, und daß an der Bodenwanne (5) ausgestellte Eck-(16) und Mittelfüße (17) aus Metall oder Kunststoff mit Positionierflächen (18) befestigt sind.

15. Palettenbehälter nach Anspruch 14, **dadurch gekennzeichnet, daß** der als Blechbehälter ausgebildeten Palettenbehälter (47) mit einem flexiblen Inliner (77) aus einer Kunststoffolie oder einer Metall-Kunststoffverbundfolie ausgestattet ist.

## Claims

1. A pallet container (1) for liquids, with an inner container (2) of plastics material with a closable filler neck (34) and a closable emptying neck (10) and a bottom (6) formed as a draining bottom, with a central, flat drainage channel (7) which runs with a slight fall from the rear wall (8) of the container to the emptying neck (10) arranged on the front wall (9) of the container (2) for connection of a discharge tap (11), a pallet (4) fixed on a pallet frame (35) and having a bottom pan (5) for mating reception of the inner container (2) and an outer jacket (3) of metal bearing on the inner container (2), **characterizing in that** the bottom (12) of the bottom pan (5) matched to the draining bottom (6) of the inner container (2), formed to be self-supporting and preferably made as a deep-drawn part of sheet material, has stiffening corrugations (13a, 13b) and the bases of the corrugations lie in a common horizontal plane (15-15).

2. A pallet container according to claim 1, **characterized in that** the pallet frame (35) comprising corner (16) and middle feet (17) engages in an edge depression (36) of the cover (30) fixed on the upper edge (31) of the sheet material jacket (3) when stacking pallet containers (1) with sheet material jackets (3), and is surrounded in mating manner by the upper edge (31) of the sheet material jacket (3), and **in that** the pallet frame (35) engages in the upper terminating section (43) of the mesh jacket (38) of the respective lower pallet container (37) when stacking pallet containers (37) with mesh jacket (38), while the corner feet (16) and middle feet (17) are supported on the upper terminating section (43) of the mesh jacket (38) of the lower pallet container (37).

3. A pallet container according to claim 1 and 2, **characterized by** codes identifying the contents are applied to the positioning surfaces (18) of the corner feet (16) and/or middle feet (17).

4. A pallet container according to any of claims 1 to 3, **characterized in that** the bottom pan (5) has a horizontal opening edge (27) for attachment of a sheet material jacket (3) or the mesh rods (39) of a mesh jacket (38).

5. A pallet container according to claim 4, **characterized by** a flange (28) for positioning the sheet material or mesh jacket (3 or 38), the web being turned up at right angles from the horizontal opening edge (27) of the bottom pan (5).

6. A pallet container according to any of claims 1 to 5, **characterized in that** the central section of the front wall (9) of the inner container (2) is formed with an indentation (19) in the lower region, on which is formed the emptying neck (10) for fitting a discharge tap (11) disposed within the outline of the inner container (2), and **in that** the front wall (23) of the bottom pan (5) receiving the inner container (2) has an indentation (24) corresponding to the indentation (19) of the inner container (2) and on which a hood (25) matched to the indentation (19) of the inner container (2) is moulded on in one piece or is welded on as a separate part, wherein there is a through opening (26) in the indentation (24) of the front wall (23) of the bottom pan (5) and the hood (25) adjoining the indentation (24), for reception of the emptying neck (10) of the inner container (2).

7. A pallet container according to claim 6, **characterized in that** the indentation (19) of the inner container (2) with the emptying neck (10) and a bottom sump (20) on the neck attachment are formed as a hood-like plastics injection moulded part (22), which is blow-moulded on to the inner container (2).

8. A pallet container according to any of claims 1 to 7, **characterized in that** the housing (44) of the discharge tap (11) made from plastics material is screwed fast on to the emptying neck (10) of the inner container (2) by means of a divided back nut (45) of plastics material, whose halves are welded together on the inlet neck (46) of the tap housing (44).

9. A pallet container with a mesh jacket according to any of claims 1 to 8, **characterized by** an opening (73) in the mesh jacket (38) on the front side (72) of the pallet container (71) fitted with a mesh jacket (38), as well as two guide rails (74) fixed in the opening (73) to the horizontal mesh rods (40) and disposed within the mesh jacket outline, for sliding in an continuous sheet (75) as protection against dirt and damage for the discharge tap (11), as well as for application of inscriptions and for sliding a flat cassette (76) of sheet material or plastics material for holding papers of all kinds accompanying the goods.

10. A pallet container according to claim 9, **characterized by** a removal seal for the protective sheet (75) as an originality seal and to protect the discharge tap (11) against unauthorised opening.

11. A pallet container according to any of claims 1 to 10, **characterized in that** the inner container (2) of plastics material of the pallet container (1; 37; 71) is fitted with an outer jacket (3) of sheet material or a mesh jacket (38).

12. , A pallet with a mesh jacket according to any of claims 1 to 11, **characterized by** a sheet material jacket bearing on the plastics inner container and an outer mesh jacket bearing against the sheet material jacket.

13. A pallet container according to claim 12, **characterized by** openings in the sheet material jacket, e.g. as sight windows for checking the liquid in the plastics inner container.

14. A pallet container (47) for liquids, with a bottom in the form of a pallet (4), wherein the pallet is designed to be handled by fork-lift trucks, rack servicing apparatus and the like and is formed as a bottom pan (5) of sheet material with an opening edge (27), to which the container jacket (3) of sheet material is screwed of welded fluid tight, an emptying neck (48) with a discharge fitting is fitted on the front wall (49) of the bottom pan (5) and a closing cover (53) of sheet material with a filling neck (54) and a screw cap (55) is fixed fluid tight on the upper edge (31) of the sheet material jacket (3), **characterized in that** the bottom (12) of the tray (5) is formed as a draining bottom with a central, flat drain channel (52) which runs with a slight fall from the tray rear wall (51) to the discharge tap (11) fitted on the front wall (49) of the bottom pan (5), the drain bottom (12) of the bottom pan (5) has stiffening corrugations (13a, 13b) with the bases (14) of the corrugations lying in a common horizontal plane (15-15), and **in that** exposed corner feet (16) and middle feet (17) of metal or plastics material with positioning surfaces (18) are fixed to the bottom pan (5).

15. A pallet container according to claim 14, **characterized in that** the pallet container (47) formed as a sheet material container is equipped with a flexible inner liner (77) of plastics film or a composite metal and plastics film.

## Revendications

1. Cuve-palette (1) pour liquides, comportant une cuve intérieur (2) en matière plastique munie de tubulures de remplissage et de vidange (34) pouvant être fermées, et d'un fond (6) agencé en fond d'écoulement ayant une rigole d'écoulement (7) médiane plate qui s'étend, pour raccorder un robinet de soutirage (11), en ayant une légère déclivité de la paroi arrière (8) de la cuve à la tubulure de vidange (10) montée sur la paroi avant (9) de la cuve (2), d'une palette (4) fixée à un cadre (35) de palette et munie d'une cuvette de fond (5) pour la réception avec complémentarité de forme de la cuve intérieure (2), ainsi que d'une enveloppe extérieure (3) en métal s'appliquant à la cuve intérieure (2), **caractérisée par le fait que** le fond (12) de la cuvette de fond (5) adapté au fond d'écoulement (6) de la cuve intérieure (2) autoportant et, de préférence sous la forme d'une pièce en tôle ayant subi un emboutissage profond, comporte des moulures de raidissement (13a, 13b), les bases (14) des moulures étant dans un plan horizontal commun (15-15).

2. Cuve-palette selon la revendication 1, **caractérisée par le fait que**, lors de l'empilage des cuves-palette (1) à enveloppe en tôle (3), de cadre (35) de palette comportant des pieds d'angle (16) et médians (17) pénètre dans un renfoncement (36) du bord du couvercle (30) fixé sur le bord supérieur (31) de l'enveloppe en tôle (3), et qu'il est enserré par le bord supérieur (31) de l'enveloppe en tôle (3) selon une liaison par complémentarité de forme, et que, lors de l'empilage des cuves-palette (37) à enveloppe grillagée (38), le cadre (35) de palette pénètre dans le profil d'extrémité supérieure (43) de l'enveloppe grillagée (38) de la cuve-palette (37) inférieure, les pieds d'angle (16) et médians (17) prenant appui sur le profil d'extrémité supérieur (43) de l'enveloppe grillagée (38) de la cuve-palette (37) inférieure.

3. Cuve-palette selon la revendication 1 et 2, **caractérisée par** des codages destinés à l'identification de la matière de remplissage, qui sont apposés sur les surfaces de mise en position (18) des pieds d'angle (16) et/ou médians (17).

4. Cuve-palette selon l'une des revendications 1 à 3, **caractérisée par le fait que** la cuvette de fond (5) comporte un bord horizontal (27) de délimitation d'ouverture destiné à la fixation d'une enveloppe en tôle (3) ou des barreaux (39) d'une enveloppe grillagée (38).

5. Cuve-palette selon la revendication 4, **caractérisée par** une aile (28) coudée perpendiculairement vers le haut à partir du bord horizontal (27) de la cuvette de fond (5), qui est destinée à la mise en position de l'enveloppe en tôle ou grillagée (38).

6. Cuve-palette selon l'une quelconque des revendications 1 à 5, **caractérisée par le fait que** la zone inférieure de la partie au milieu de la paroi avant (9) de la cuve intérieure (2) comporte une partie cintrée (19), sur laquelle est formée la tubulure de vidange (10) pour la mise en place d'un robinet de soutirage (11) situé à l'intérieur du contour de la cuve intérieure (2), et que le paroi avant (23) de la cuvette de fond (5) recevant la cuve intérieure (2) comporte une partie cintrée (24) correspondant à la partie cintrée (19) de la cuve intérieure (2), sur laquelle un capotage (25) adapté à la partie cintrée (19) de la cuve intérieure (2) est formé d'un seul tenant ou soudé en tant qu'élément rapporté, une ouverture continue (26) étant pratiquée dans la partie cintrée (24) de la paroi avant (23) de la cuvette de fond (5) et dans le capotage (25) se raccordant à la partie cintrée (24) et étant destinée à la réception de la tubulure de vidange (10) de la cuve intérieure (2).

7. Cuve-palette selon la revendication 6, **caractérisée par le fait que** la partie cintrée (19) de la cuve intérieure (2) est fabriquée avec la tubulure de vidange (10) et un puisard de fond (20), situé à l'embase de la tubulure, sous la forme d'une pièce en matière plastique (22) moulée par injection, conformée en capotage, est soufflée sur la cuve intérieure (2).

8. Cuve-palette selon l'une quelconque des revendications 1 à 7, **caractérisée par** la fait que le corps (44) du robinet de soutirage (11) en matière plastique est vissé sur la tubulure de vidange (10) de la cuve intérieure (2) au moyen d'un écrou-raccord (45) en matière plastique en deux parties, dont les moitiés sont soudées ensemble sur la tubulure d'admission (46) du corps (44) du robinet.

9. Cuve-palette comportant une enveloppe grillagée selon l'une quelconque des revendications 1 à 8, **caracterisée par** un évidemment (73) pratiqué dans l'enveloppe grillagée (38) sur la face frontable (72) du cuve-palette (71) munie d'une enveloppe grillagée (38), ainsi que par deux rails de guidage (74) fixés dans l'évidemment (73) sur les barreaux horizontaux (40), qui sont situés à l'intérieur du contour de l'enveloppe grillagée, et qui sont destinés à l'insertion d'une tôle continue (75) servant à protéger le robinet de soutirage (11) des saletés et des endommagements, ainsi qu'à apposer des marquages et à insérer une cassette plate (76) en tôle ou en matière plastique pour la mise en place de documents d'accompagnement de la marchandise de tout type.

10. Cuve-palette selon la revendication 9, **caractérisée par** un dispositif de sécurité empêchant de retirer la tôle de protection (75) en tant que fermeture d'origine et de protection contre une ouverture non autorisée du robinet de soutirage (11).

11. Cuve-palette selon l'une quelconque des revendications 1 à 10, **caractérisée par le fait que** la cuve intérieure (2) en matière plastique de la cuve-palette (1; 37; 71) est munie d'une enveloppe extérieure (3) en tôle ou d'une enveloppe grillagée (38).

12. Cuve-palette comportant une enveloppe grillagée selon l'une quelconque des revendications 1 à 11, **caractérisée par** une enveloppe en tôle s'appliquant à la cuve intérieure en matière plastique, ainsi que par une enveloppe grillagée extérieure venant à l'appui de cette enveloppe en tôle.

13. Cuve-palette selon la revendication 12, **caractérisée par** des ouvertures dans l'enveloppe en tôle, par exemple en tant que hublots destinés au contrôle du liquide contenu dans la cuve intérieure en matière plastique.

14. Cuve-palette pour liquides comportant un fond réalisé sous la forme d'une palette (4), la palette (4) étant agencée pour une manutention au moyen d'un chariot gerbeur, d'un transélévateur ou analogue, et sous la forme d'une cuvette de fond (5) en tôle ayant un bord (27) délimitant und ouverture, par lequel l'enveloppe en tôle (3) de la cuve est soudée ou vissée de facon étanche aux liquides, il est monté sur la paroi avant (49) de la cuvette de fond (5) une tubulure de vidange (48) munie d'un robinet de vidange et il est fixé sur le bord supérieur (31) de l'enveloppe en tôle (3) un couvercle de fermeture (53) en tôle comportant une tubulure de remplissage (54) et un bouchon à vis (55), de facon étanche aux liquides, **caractérisée en ce que** le fond (12) de la cuvette (5) est agencé en tant que fond d'écoulement ayant au milieu une rigole d'écoulement (52) plate, qui s'étend avec une légère déclivité de la paroi arrière (51) de la cuvette au robinet de soutirage (11) qui est disposé sur la paroi avant (49) de la cuvette de fond (5), le fond d'écoulement (12) de la cuvette de fond (5) comportant des moulures de raidissement (13a, 13b) dont les bases (14) sont dans un plan horizontal commun (15-15), que des pieds d'angle (16) et médians (17) en métal ou en matière plastique, en saillie et présentant des surfaces de mise en position (18) sont fixés à la cuvette de fond (5).

15. Cuve-palette selon la revendication 14, **caractérisée en ce que** la cuve-palette (47) réalisée sous la forme d'une cuve en tôle est munie d'un revêtement interne (77) souple en une feuille en matière plastique ou en une feuille composite en matière plastique/métal.
